# EUROPEAN PATENT APPLICATION

(11) **EP 4 495 409 A1**
(43) Date of publication of application: **22.01.2025**
(21) Application number: 24181279.1
(22) Date of filing: 11.06.2024
(51) Int. Cl.: F02K 1/72, F02C 7/00, B64D 29/08

(54) **PROPULSION DEVICE WITH THRUST REVERSER LOCATING ARRANGEMENT**

(30) Priority: 07.07.2023 GB 202310479
(71) Applicant: Rolls-Royce plc, London N1 9FX (GB)
(72) Inventor: Stretton, Richard, Derby, DE24 8BJ (GB)
(74) Representative: Rolls-Royce plc

(57) **Abstract**

A propulsion device 10 comprises: a casing structure 402 to surround a fan of the propulsion device; a core structure 111 to support a core of the propulsion device; a thrust reverser unit, TRU , comprising two thrust reverser halves 612, 614, each thrust reverser half being pivotable about a respective hinge line 604 between an open position for access to the core structure, and a closed position. Upper and lower support members 410, 430 extend from the casing structure at diametrically opposing sides of a centreline axis. For each thrust reverser half there is at least one locating arrangement comprising an upper locating arrangement with cooperating portions configured to engage each other as the thrust reverser half moves towards the closed position in a closing operation; and/or a lower locating arrangement with cooperation portions configured to engage each other as the thrust reverser half moves towards the closed position in the closing operation.

## Description

### TECHNICAL FIELD

The present disclosure relates to a propulsion device comprising a thrust reverser unit (TRU) provided with a locating arrangement.

### BACKGROUND

It is known to provide a propulsion device, such as a gas turbine engine, with a thrust reverser unit (TRU). In known arrangements, a TRU is provided axially aft of a fan and comprises thrust reversing structures which surround a bypass duct of the gas turbine engine and are configured to selectively permit a reversed flow for thrust reversal.

It is known to mount a TRU to a supporting structure of the gas turbine engine, such as a pylon for the gas turbine engine. In some arrangements, a TRU is provided in two or more TRU parts mounted to a supporting structure by a hinge. Each TRU part may be pivoted about the hinge to adopt an open configuration of the TRU to provide service and maintenance access to inner parts of the propulsion device (e.g. a gas turbine engine core). In such arrangements, structural connections between the TRU part and other parts of the gas turbine engine (other than the hinge) may be selectively disengaged to permit movement between the open configuration and a closed configuration.

### SUMMARY

According to a first aspect there is provided a propulsion device comprising:
a casing structure to surround a fan of the propulsion device;
a core structure to support a core of the propulsion device;
a thrust reverser unit, TRU, comprising two thrust reverser halves, each thrust reverser half being pivotable about a respective hinge line between an open position for access to the core structure, and a closed position;
upper and lower support members extending from the casing structure at diametrically opposing sides of a centreline axis, defining a vertical direction of the propulsion device from the lower support member to the upper support member, each support member extending from the casing structure at an axial location adjacent to or overlapping an axial extent of the TRU;
wherein for each thrust reverser half there is at least one locating arrangement comprising:
an upper locating arrangement comprising an upper TRU locating portion provided on the thrust reverser half and an upper support locating portion provided on the upper support member, mutually configured to engage each other as the thrust reverser half moves towards the closed position in a closing operation; and/or
a lower locating arrangement comprising a lower TRU locating portion provided on the thrust reverser half and a lower support locating portion provided on the lower support member, mutually configured to engage each other as the thrust reverser half moves towards the closed position in the closing operation.

It may be that for at least one of the upper and lower support members, the support member extends from the casing structure to the core structure to provide a casing-core load path.

It may be that for each thrust reverser half the at least one locating arrangement comprises the upper locating arrangement, and the hinge line is angularly offset from the vertical direction by a hinge offset about the centreline axis. It may be that the thrust reverser half is configured so that in the closed position the upper TRU locating portion is angularly offset from the vertical direction by a locating portion offset about the centreline axis, and the locating portion offset is less than the hinge offset, such that in the closing operation, the upper TRU locating portion engages the respective upper support locating portion along a direction having a radially outward component.

The upper locating feature may be configured to provide a structural load path between the TRU half and one or more other structural elements of the propulsion device via the upper support member, for example the casing structure and/or the core structure. The load path may include radial walls of the upper support member, inboard of the hinge line.

It may be that each thrust reverser half comprises a TRU coupling portion at an angular location offset from the vertical direction by a coupling offset about the centreline axis, the TRU coupling portion configured to engage a cooperating coupling portion of the casing structure in the closed position to form a coupling arrangement, coupling the thrust reverser half to the casing structure. It may be that the coupling offset is greater than the hinge offset, such that in the closing operation, the TRU coupling portion engages the coupling portion of the casing structure along a direction having a radially inward component.

It may be that the TRU coupling portion of each thrust reverser half comprises a projecting arm axially extending to overlap with an axial extent of the casing structure, and wherein an engaging portion depends from the projecting arm radially inwardly when the thrust reverser half is in the closed position to engage the cooperating coupling portion of the casing structure.

It may be that the coupling portion of the casing structure comprises a groove and/or recess having a radially outer opening configured to receive the engaging portion of the TRU coupling portion.

It may be that the upper locating arrangement and the coupling arrangement are configured so that in the closing operation, the upper TRU locating portion and the upper support locating portion engage each other before the coupling portions of the coupling arrangement engage each other, to guide further movement in the closing operation.

Accordingly, the upper locating arrangement is configured to align the thrust reverser half during the closing operation for coupling of the coupling arrangement (e.g, in the further movement in the closing operation).

It may be that each upper TRU locating portion and corresponding upper support locating portion are configured to engage by a pin and opening arrangement, whereby the pin is configured to be received in the opening.

For example, the pin may be provided on an upper TRU locating portion and the receiving opening may be provided on the corresponding upper support locating portion, or vice versa. The receiving opening may be a hole (e.g. a blind or through hole on the respective component, or may be defined by a surrounding wall or a plurality of discrete members which project to define the opening, and which surround the pin in the closed position.

The pin may be a tapered pin configured to aid location of the pin in the receiving portion.

It may be that wherein for each thrust reverser half: the at least one locating arrangement comprises the lower locating arrangement; and the lower TRU locating portion is configured to engage the lower support locating portion along a closing direction during the closing operation which substantially opposes the closing direction associated with the opposing lower TRU locating portion.

The expression "substantially opposing" is used herein to indicate that the two closing directions along which the two lower TRU locating portions approach the lower support member are generally opposing one another but need not be diametrically opposed (i.e., along the same line). For example, the angle between the closing directions may be 180 ° ± 20°, for example 180 ° ± 15° or 180 ° ± 10°.

In addition or instead of the above definition with respect to the closing direction, the lower TRU may be defined as configured to engage the lower support locating portion along a closing direction which faces against the lower support member.

It may be that the lower locating arrangement and the coupling arrangement are configured so that in the closing operation, the lower locating portion and the lower support portion engage each other before the coupling portions of the coupling arrangement engage each other, to guide further movement in the closing operation.

It may be that each lower TRU locating portion and corresponding lower support locating portion are configured to engage by a pin and opening arrangement, whereby the pin is configured to be received in the opening.

For example, the pin may be provided on a lower TRU locating portion and the receiving opening may be provided on the corresponding lower support locating portion, or vice versa. The receiving opening may be a hole (e.g. a blind or through hole on the respective component, or may be defined by a surrounding wall or a plurality of discrete members which project to define the opening, and which surround the pin in the closed position. The pin may be a tapered pin configured to aid location of the pin in the receiving portion.

It may be that the at least one locating arrangement comprises the upper locating arrangement; and the upper locating arrangement is configured so that movement from the open configuration to the closed configuration reduces a radial separation between opposing portions of the upper locating arrangement, and provides a radial clearance between the opposing portions in the closed configuration in a static state of the propulsion device. It may be that the upper locating arrangement is configured to close the radial clearance under load to provide a load path between the respective thrust reverser half and the upper support member.

It may be that the at least one locating arrangement comprises the upper locating arrangement; and the upper locating arrangement is configured so that there is an axial clearance and/or a circumferential clearance between opposing portions of the upper locating arrangement in a static state of the propulsion device. It may be that the upper locating arrangement is configured to close the axial clearance and/or the circumferential clearance under load to provide a load path between the respective thrust reverser half and the upper support member.

It may be that the at least one locating arrangement comprises the lower locating arrangement; and the lower locating arrangement is configured so that there is a circumferential clearance between opposing portions of the lower locating arrangement in a static state of the propulsion device. It may be that the lower locating arrangement is configured to close the circumferential clearance under load to provide a load path between the thrust reverser halves; or between the respective thrust reverser half and the lower support member.

It may be that the at least one locating arrangement comprises the lower locating arrangement; wherein the lower locating arrangement is configured so that there is a radial clearance and/or an axial clearance between opposing portions of the lower locating arrangement in a static state of the propulsion device; and wherein the lower locating arrangement is configured to close the circumferential clearance under load to provide a load path between the respective thrust reverser half and the lower support member.

It may be that each upper locating arrangement is configured to provide a structural load path between the respective thrust reverser half and a support structure of the propulsion device for transferring vertical, lateral and/or axial loads; and/or each lower locating arrangement is configured to provide a structural load path between the respective thrust reverser half and a support structure of the propulsion device for transferring vertical, lateral and/or axial loads. It may be that the support structure of the propulsion device is the casing structure and/or the core structure.

Each thrust reverser half may be associated with a nacelle of the propulsion device and associated nacelle loading, and so the structural load path formed by the or each locating arrangement provides for nacelle loads to be transferred to support structure(s) of the propulsion device.

It may be that each upper locating arrangement is configured to provide a structural load path between the respective thrust reverser half and a support structure of the propulsion device for transferring roll, pitch and/or yaw loads; and/or wherein each lower locating arrangement is configured to provide a structural load path between the respective thrust reverser half and a support structure of the propulsion device for transferring roll, pitch and/or yaw loads. It may be that the support structure of the propulsion device is the casing structure and/or the core structure.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only by the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.0, 3.1, or 3.2 to 3.8. In some arrangements, the gear ratio may be outside these ranges.

The radius of the fan may be measured between the engine centreline and the tip of a fan blade at its leading edge. The fan diameter (which may simply be twice the radius of the fan) may be greater than (or on the order of) any of: 210 cm, 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 210 cm to 230 cm, or 240 cm to 280 cm, or 290 cm to 320 cm, or 330 cm to 380 cm.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BREIF DESCRIPTION OF THE DRAWINGS

Embodiments will now be described by way of example only with reference to the accompanying drawings, which are purely schematic and not to scale, and in which:
FIG. 1 is a sectional side view of a gas turbine engine;
FIG. 2 is a close up sectional side view of an upstream portion of a gas turbine engine;
FIG. 3 is a partially cut-away view of a gearbox for a gas turbine engine;
FIG. 4 is a schematic cross-sectional side view of components of a gas turbine engine;
FIG. 5 is a schematic cross-sectional side view of components of a gas turbine engine;
FIG. 6A and FIG. 6B are schematic cross-sectional axial views of a TRU with a TRU half in a closed and open configuration respectively;
FIG. 7A and FIG. 7B are schematic partial cross-sectional axial views of an upper load share arrangement for a TRU;
FIG. 8A and FIG. 8B are schematic partial cross-sectional side views of the upper load share arrangement.
FIG. 9A and FIG. 9B are schematic partial cross-sectional axial views of a lower load share arrangement for a TRU;
FIG. 10 is a schematic partial cross-sectional side view of the lower load share arrangement; and
FIG. 11 is a schematic partial cross-sectional axial view of a TRU showing angularly distributed coupling locations.

### DETAILED DESCRIPTION

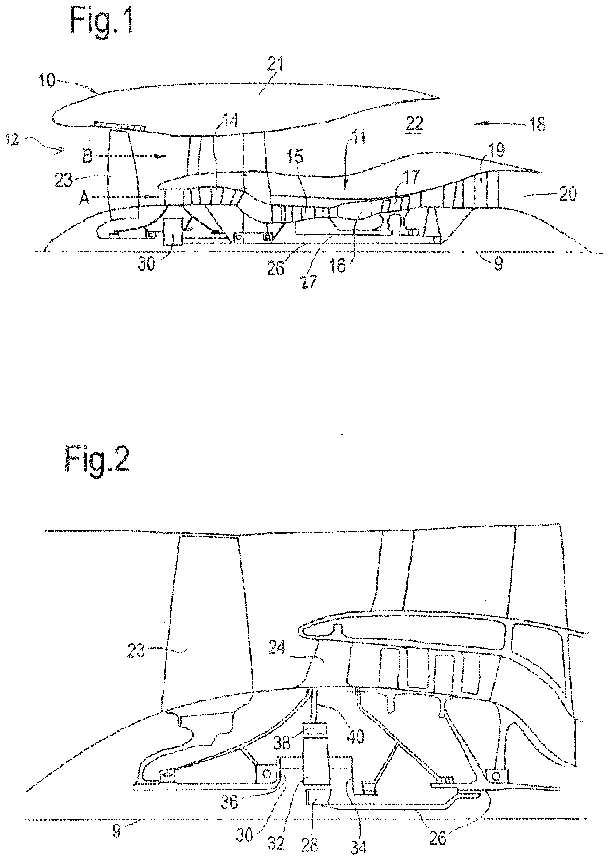

FIG. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust.

The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in FIG. 2. The low pressure turbine 19 (see FIG. 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

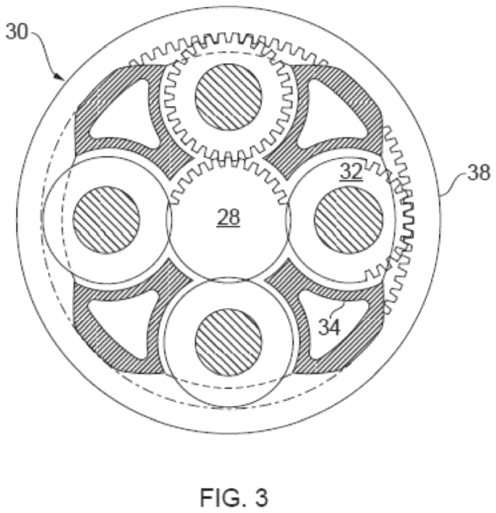

The epicyclic gearbox 30 is shown by way of example in greater detail in FIG. 3. Each of the sun gear 28, planet gears 32 and ring gear 38 comprise teeth about their periphery to intermesh with the other gears. However, for clarity only exemplary portions of the teeth are illustrated in FIG. 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in FIG. 2 and FIG. 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in FIG. 2 and FIG. 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the FIG. 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of FIG. 2. For example, where the gearbox 30 has a star arrangement (described above), the skilled person would readily understand that the arrangement of output and support linkages and bearing locations would typically be different to that shown by way of example in FIG. 2.

Accordingly, the present disclosure extends to a gas turbine engine having any arrangement of gearbox styles (for example star or planetary), support structures, input and output shaft arrangement, and bearing locations. Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial and circumferential directions are mutually perpendicular.

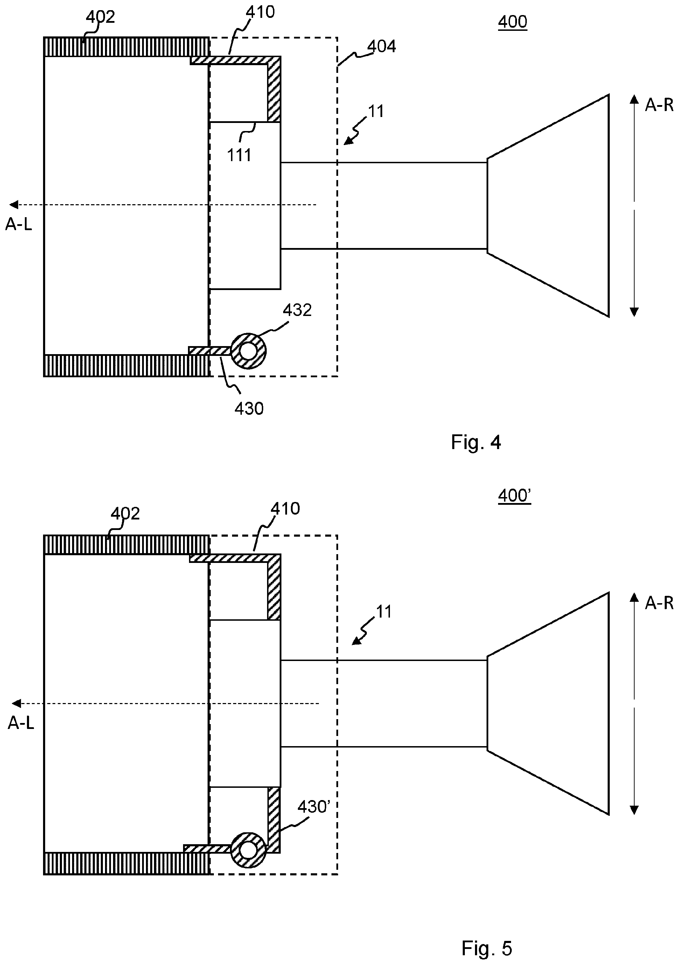

FIG. 4 schematically shows a partial cross-sectional side view of components of a gas turbine engine 400, excluding a thrust reverser unit for clarity. The gas turbine engine 400 may be or correspond to the example gas turbine engine 10 of FIG. 1, with like reference numerals used. A longitudinal axis A-L corresponds to the principle rotational axis 9 of FIG. 1, whereas a radial axis A-R extends radially (at any angle) from the longitudinal axis A-L. The illustrated components include an annular casing structure 402 to surround a fan (forming part of the nacelle 21 of the gas turbine engine as illustrated in FIG. 1) at a forward end of the longitudinal axis A-L, and an engine core 11 which is schematically illustrated with a variable diameter corresponding to compressor, combustor and turbine sections.

In the example of FIG. 4, a location 404 for a TRU is indicated, axially aft of the casing structure 402. The casing structure 402 may be structurally mounted to the engine core 11 or associated structure (such as an engine intercase), for example by structural outlet guide vanes axially aft of the fan. In the example of FIG. 4, there are upper and lower support members 410, 430 for engaging with a TRU.

The upper support member 410 extends from the casing structure 402 at an upper point adjacent to the axial extent of the TRU (i.e. of the location 404), and extends to overlap with the axial extent of the TRU. The upper support member 410 extends from the casing structure 402 to a core structure 111 of the engine core 11, thereby providing a casing-core load path. As shown in FIG. 4, the upper support member 410 has a portion which extends substantially axially aft from the casing structure 402 and a further portion which extends substantially radially to the core structure 111, but in other examples the upper support member may take any suitable shape or form, and/or may not provide a casing-core load path.

The lower support member 430 extends from the casing structure at a lower point adjacent to the axial extent of the TRU, and extends to overlap with the axial extent of the TRU. The lower support member 430 extends from the casing structure 402 as a cantilever to support a locating portion 432 of the lower support member, and does not extend to the core structure of the engine. However, in other examples the lower support member may take any suitable shape or form, and may extend to the core structure to provide a casing-core load path, as is shown in the variant example gas turbine engine 400' of FIG. 5 in which the lower support member 430' extends to the core structure along a similar path to the upper support member.

The upper and lower points (from which the upper and lower support members 410, 430 extend from the casing structure 402) are at diametrically opposing sides of the longitudinal axis A-L (which corresponds to the engine centreline axis as noted above), and are considered to define a vertical direction of the gas turbine engine. As will be appreciated, the expression "vertical direction" does not necessarily indicate a precise vertical direction, noting that the gas turbine engine may be stored or mounted at various positions with respect to a longitudinal axis and manoeuvred in use. Instead, the vertical direction is a direction defined by the positions of the upper and lower points (e.g. by the upper and lower support members), and which generally corresponds to a lower-to-upper direction according to conventional installation of the gas turbine engine. The vertical direction may be aligned with (e.g. pass through) a location known in the art as TDC "Top Dead Centre", which may also be referred to as a 12 O'Clock position of the engine.

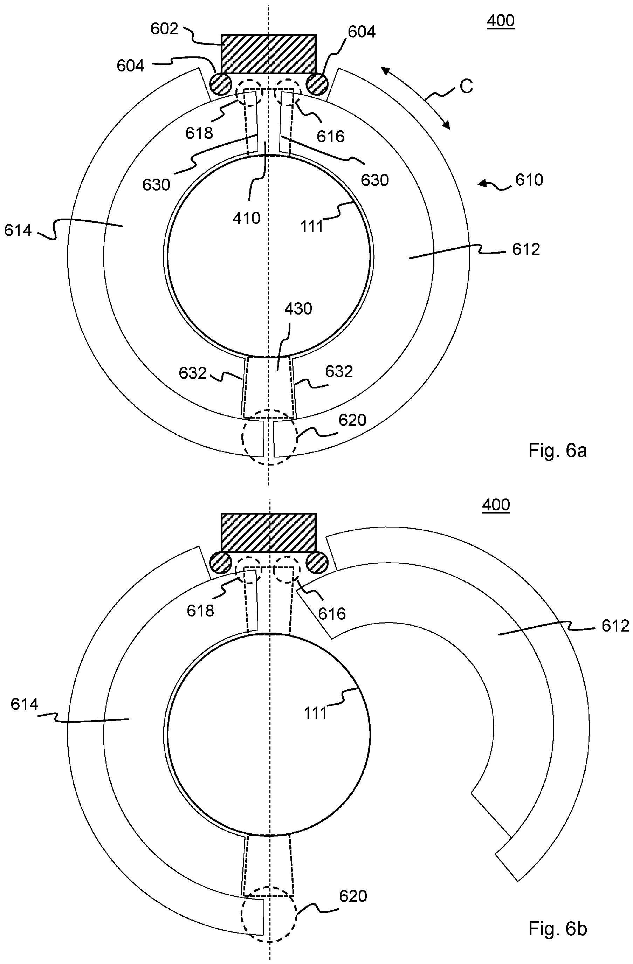

FIG. 6A and FIG. 6B show selected components of the example gas turbine engine 400 of FIG. 4 in axial cross-section, including a TRU 610 comprising opposing thrust reverser halves 612, 614. The view is normal to the longitudinal axis L-A (not shown), and indicates a circumferential direction with arrow C (bidirectional) which is referenced in the further discussion below. FIG. 6A shows the thrust reverser halves 612, 614 both in a closed configuration, whereas FIG. 6B shows a first thrust reverser half 612 in an open configuration.

FIG. 6A shows a support structure 602 which may be a component of the gas turbine engine 400 coupled to a pylon for the gas turbine engine, or which may be a pylon to which the gas turbine engine is coupled to. Each thrust reverser half 612, 614 is coupled to the support structure 602 via a respective hinge 604 for articulation of the thrust reverser half from a closed position in which it surrounds the engine core 11 (FIG. 6A) and an open position which reveals an opening for access to the engine core 11.

Each thrust reverser half 612, 614 is shown in this schematic as having an inner part and an outer part. The inner part may provide a primary structure of the thrust reverser half, including any guide ducts and structural members for functional operation as a thrust reverser, whereas the outer part may include an outer skin or structure that is configured to conform with and form part of the outer profile of the nacelle 21 (of FIG. 1). The outer part may include a movable member which is movable relative to the inner part to reveal guide ducts of the thrust reverser unit.

The further discussion relates to arrangements for forming structural load paths between the thrust reverser halves and other supporting structures of the gas turbine. In particular, while it is known to provide hingedly attached thrust reverser parts which are movable between closed and open positions, such arrangements may inherently have limited permanent structural attachments, in particular the hinge. The further disclosure relates to the provision of load pathways for transferring loads from the thrust reverser halves.

FIG. 6A and FIG. 6B further show upper and lower support members 410, 430 corresponding to those discussed above with respect to FIG. 4 or FIG. 5., and which thereby extend from the casing structure 402 (and optionally to the core structure 111). As noted above, the upper and lower support members together define a vertical direction. The thrust reverser halves 612 each have a circumferential extent (with respect to the circumferential direction C) from an upper end proximal to the support structure 602, to an opposing lower end. As shown, for each thrust reverser half, the upper end is angularly offset from the vertical direction in the closed configuration by a first angular offset, and is coupled to the hinge 604 at a hinge location which is angularly offset from the vertical direction by a greater second angular offset. A circumferential extent of the thrust reverser half between the upper end and the hinge location is referred to herein as an upper end portion.

The angular offset to the hinge location has the effect that movement of each thrust reverser half 612, 614 from the closed configuration to the open configuration generally results in outboard movement of the thrust reverser half 612, 614 (FIG. 6B) with a major portion of the thrust reverser half 612, 614 moving radially outward, whereas the upper end portion moves radially inward (as seen by comparison of FIG. 6A and FIG. 6B).

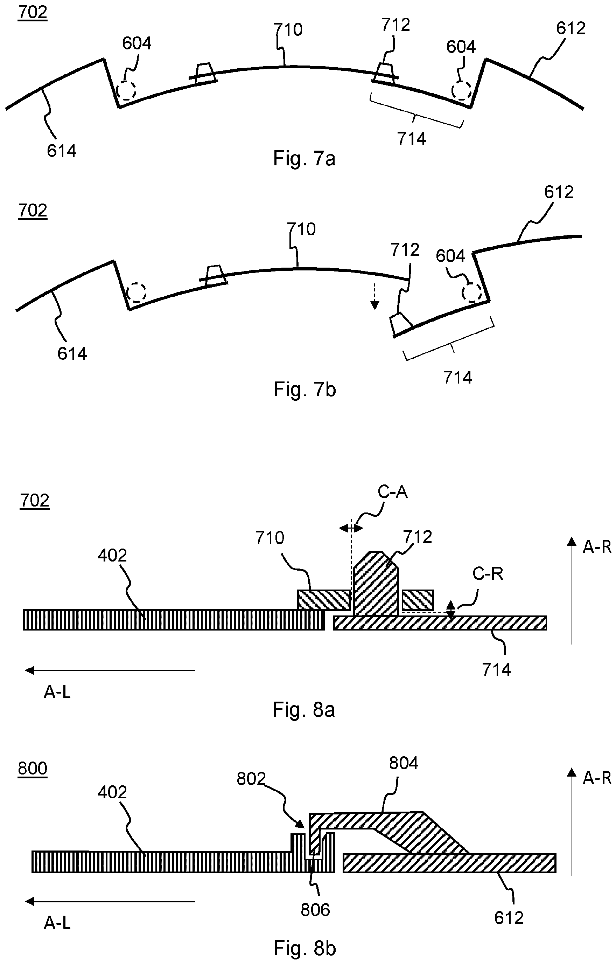

As a consequence, the upper end portion of a thrust reverser half 612, 614 moves along an arc having a radially outward component as the thrust reverser half approaches the closed configuration (i.e. from the open configuration). FIG. 6A and FIG. 6B show engagement locations 616, 618 for engagement between cooperating features on the upper end portion and on the upper support member 410, as will be described in further detail below with reference to FIG. 7A, FIG. 7B and FIG. 8.

As shown in FIG. 6.a and FIG. 6B, the thrust reverser halves have a radial extent, and in some implementations each thrust reverser half may have a radial wall 630 at its upper end, and a radial wall 632 at is lower end, for load transfer through the thrust reverser half. As shown, the upper radial wall 630 is angularly inboard (i.e., closer to the vertical direction) than the hinge line 604. By providing the TRU engagement locations 616, 618 angularly inboard of the hinge line 604 (as discussed elsewhere herein), the engagement locations 616, 618 provide a more direct load transfer path for loads in the respective radial wall 630, as compared with a load path through the hinge line 604 (which would be at a relatively larger angular offset from the radial wall).

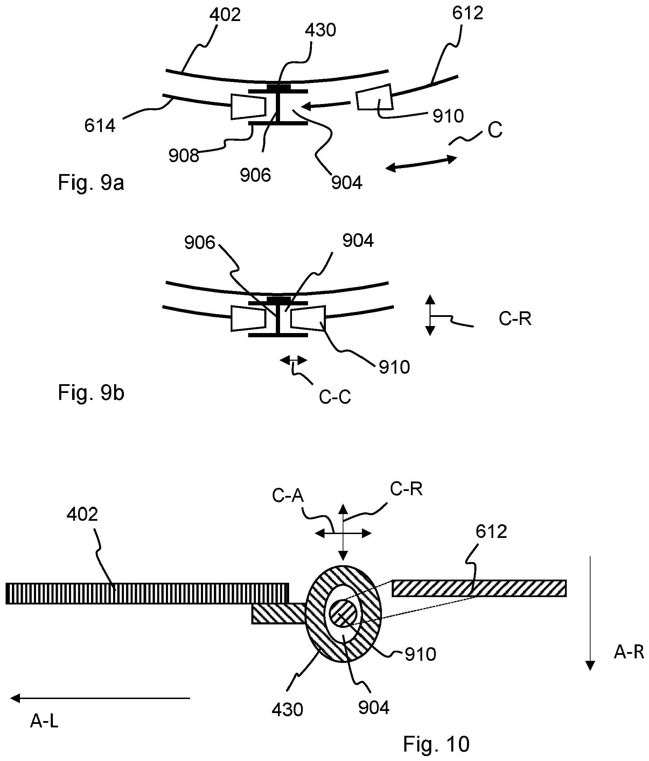

In contrast the lower end portion of each thrust reverser half 612, 614 moves along a direction or arc having a larger lateral component (or circumferential component) than a radial component, as the thrust reverser half approaches the closed configuration. This is more intuitively observed by considering how the lower end portions (if moving in unison) move towards each other along a path which, in its final stages is primarily lateral movement. FIG. 6A and FIG. 6B shown an engagement location 620 for engagement between cooperating features on the lower end portion and on the lower support member 430, as will be described in further detail below with reference to FIG. 9A, FIG. 9B, and FIG. 10. The cooperating features on the lower end portion and on the lower support member 430 provide a load path between the engine casing and the TRU halves, for example for load transfer from the TRU halves to the lower support member 430. In particular, the cooperating features at the lower engagement location 620 are at a similar angular position to the radial walls 632 at the lower ends of the thrust reverser halves, to provide an efficient load path for reacting loads in the radial walls 632.

FIG. 7A and FIG. 7B schematically show an upper locating arrangement 702 at the engagement location 616 shown in FIG. 6A and FIG. 6B. This comprises an upper support locating portion 710 provided on the upper support member 410, and an upper TRU locating portion 712 provided on the first thrust reverser half 612, in particular on the upper end portion 714 of the thrust reverser half 612. While the following discussion is with respect to the first thrust reverser half, it is equally applicable to the second thrust reverser half 614.

FIG. 7A shows the upper locating arrangement 702 with the thrust reverser half 612 in a closed configuration such that the upper TRU locating portion 712 engages the upper support locating portion 710, whereas FIG. 7B shows the upper locating arrangement 702 with the thrust reverser half 612 in an open configuration. The upper end portion 714 of the thrust reverser half 612 is configured to move radially inwardly from the closed configuration to disengage the upper TRU locating portion 712 from the upper support locating portion 710. Similarly, it will be appreciated that movement to the closed configuration causes the upper TRU locating portion 712 to engage the upper support locating portion 710 as it moves radially outwardly. Movement is about the hinge 604, as described above. The upper TRU locating portion 712 and/or the cooperating upper support locating portion 710 may have a tapered profile to aid engagement and alignment as they are progressively brought together (i.e. as they engage during a closure operation).

In the specific example illustrated in FIG. 7A and FIG. 7B, the upper TRU locating portion 712 is in the form of a projection extending from the upper end portion 714 of the thrust reverser half to engage with a receiving hole of the upper support locating portion 710. However, in other examples, an upper TRU locating portion may engage with an upper support locating portion in any suitable way, for example by a projection of the upper support location engaging with a hole or recess in the upper TRU locating portion, by virtue of complementary profiles (e.g. complementary intermeshing or interlocking profiles), or similar arrangements.

FIG. 8A shows a cross-sectional view of the upper locating arrangement 702 along a radially and axially-extending plane (i.e. normal to the circumferential direction) intersecting the upper TRU locating portion 712. This schematically shows the upper support locating portion 710 (of the upper support member 410) extending from the casing structure 402 for the fan, and the upper end portion 714 of thrust reverser half in a closed position so that the upper TRU locating portion 712 engages the upper support locating portion 710. FIG. 8A also shows clearances associated with engagement at the upper locating arrangement 702. In particular, FIG. 8A illustrates an axial clearance C-A between the upper TRU locating portion 712 and a receiving hole provided in the upper support locating portion 710, and it will be appreciated that there may also be a circumferential clearance at that location. FIG. 8A also shows a radial clearance C-R, which in this particular example is between the upper end portion 714 and an opposing surface of the upper support locating portion 710, but in other examples may be between the upper TRU locating portion 712 and an opposing feature of or associated with the upper support locating portion 710 (for example a radially outer end wall which the upper TRU locating portion 712 may oppose and/or abut under load). Further discussion of these clearances is provided later in this disclosure.

In use in a closure operation, the upper TRU locating portion 712 moves towards and engages the upper support locating portion
FIG. 8B shows a cross-sectional view of a coupling arrangement 800 between a thrust reverser half 612 and the casing structure 402 along a radially and axially-extending plane (i.e. normal to the circumferential direction) which intersects the thrust reverser half 612 when in a closed configuration and at an angular location away from the respective engagement location 616 (as shown in FIG. 6A FIG. 6B). As in FIG. 8A, this schematically shows the casing structure 402 for the fan, which is an annular structure continuous with the portion of the casing structure 402 shown in FIG. 8A. At this angular location, the casing structure 402 comprises a casing coupling portion 802 at or towards its axially rearward end for attaching to a TRU coupling portion 804 of the thrust reverser half 612. In this particular example, the casing coupling portion 802 is a groove for receiving an engaging portion 806 of the TRU coupling portion 804 (as discussed below). The groove may be formed as a recess in the casing structure 402, by one or more projecting groove walls extending from the profile of the casing structure 402, or by both. The groove may be formed to have a radially-outer opening. The groove may have any suitable shape, such as a U-shape or V-shape groove. Instead of a groove formed between two walls, there may only be a single wall, over which the TRU coupling portion 804 of the thrust reverser half 612 may extend in use.

The casing coupling portion 802 (e.g. the groove) may be provided around an arcuate extent of the casing structure 402 between the upper and lower support members (e.g. on both lateral sides of the fan casing, for attaching to respective thrust reverser halves). Otherwise, the casing coupling portion 802 may be provided as a plurality of discrete attachment features 802 at angularly distributed locations around the casing structure for the same purpose.

The thrust reverser half 612 comprises the TRU coupling portion 804 as described above, which may similarly be provided around corresponding arcuate extent of the thrust reverser half, or at a plurality of angularly distributed locations around the thrust reverser half 612. In the example shown in FIG. 8B, the TRU coupling portion 804 is in the form of a "J-blade", which is so-called owing to its cross-sectional shape comprising a projecting arm which extends radially outwardly from a profile of the thrust reverser half 612 and axially to overlap with an axial extent of the casing structure 402, and from which the engaging portion 806 depends (radially inwardly) to engage the cooperating casing coupling portion 802 of the casing structure 402 in the closed configuration (e.g. by extending into the radially-outer opening of the groove).

In use, during movement of a thrust reverser half 612 from the open configuration to the closed configuration, the thrust reverser half 612 comes into alignment with the casing structure 402 for the fan firstly at the upper portions of the thrust reverser half and subsequently towards the lower portions. This is due to the location of the hinge and the respective distances of the various portions from the hinge, as will be readily understood by considering FIG. 6A and FIG. 6B.

In this example, each thrust reverser half 612, 614 and the respective locating and coupling arrangements are configured so that, in a closure operation, the upper locating arrangement comes into engagement first, and then any coupling arrangements around the arcuate extent of the thrust reverser half come into engagement, and then the lower locating arrangement comes into engagement. In other examples, the lower locating arrangement may be configured to come into engagement before one or more coupling arrangements, which may be achieved by suitable sizing of the lower locating arrangement and the or each TRU coupling portion (and cooperating attachment feature of the casing structure).

FIG. 9A and FIG. 9B show an example lower locating arrangement at the engagement location 620 discussed above. This schematically shows a cross-sectional view of the lower support member 430 (normal to the axial direction) coupled to and extending from the casing structure 402 surrounding the fan. In this example, the lower support member 430 comprises two opposing lower support locating portions provided in the form of receiving holes 904 for receiving the respective lower TRU locating portions coupled to respective lower ends of the thrust reverser halves 612, 614. The lower support member 430 comprises an end wall 906 which is configured to oppose each lower TRU locating portion in the closed configuration, and in this example is substantially planar, extending in the vertical direction and the axial direction. Each hole 904 is defined by a bounding wall 908 extending from the end wall 906, for example to form a circular or elliptical wall.

As noted above, a lower end portion of each thrust reverser half is provided with a lower TRU locating portion 910 for engaging a respective lower support locating portion 904 during a closure operation, for example along a substantially lateral direction as discussed above. The lower TRU locating portion and/or the cooperating lower support locating portion may be tapered to aid engagement and alignment as they are progressively brought together.

In use in a closure operation, the lower TRU locating portion 910 moves towards and engages the corresponding lower support locating portion 904 along a substantially lateral direction, with the engagement serving to align the lower TRU locating portion 910 with the lower support locating portion 904.

As shown in FIG. 9B, in the closed configuration there is a circumferential clearance C-C between opposing portions at the lower locating arrangement, for example between an end face of the lower TRU locating portion 910 and the end wall 906. FIG. 9B also shows a radial clearance C-R around the lower TRU locating portion 910 as received in the lower support locating portion 904, and it will be appreciated that there may also be a similar axial clearance (not shown).

FIG. 10 shows a complementary view to illustrate engagement of the lower TRU locating portion 910 and the lower support locating portion. FIG. 10 is a schematic cross-sectional and cut-away view of a radially and axially-extending plane intersecting the lower support locating portion 904. It shows the lower support member 430 axially extending from the casing structure 402 as discussed above, and shows an example form of the lower support locating portion 904 as a circular wall defining a receiving hole for the lower TRU locating portion 910. In this example, the lower TRU locating portion 910 is provided in the form of a tapered locating pin, and is fixedly attached to the structure of the respective thrust reverser half 612 (as illustrated by dotted lines). FIG. 10 schematically illustrates the radial clearances C-R and axial clearances C-A between the pin 910 and receiving hole 904 as discussed above.

As noted elsewhere herein, in a closure operation the upper and/or lower locating arrangements serve to align a thrust reverser half as it moves towards the closed configuration, whereas the coupling portions serve to provide a structural coupling therebetween. For example, the cooperation portions of the upper and/or lower locating arrangements may come into engagement to guide movement of the thrust reverser half, thereby reducing misalignment or "play" in the position of the thrust reverser half as it approaches the closed configuration, and to align the respective thrust reverser half for proper engagement of the coupling arrangements. This may be particularly advantageous for relatively larger propulsion devices, where minor misalignments or deflections from a connection point (e.g. a connection at the hinge line) may add-up to or cause a significant deflection at an opposing side of the thrust reverser half.

It may be that in use, the upper and/or lower locating arrangements do not provide or are not relied upon to provide a load path between a thrust reverser half and the respective upper and/or lower support member (and thereby a path to the casing structure and/or core structure). As such, the clearances discussed herein may be maintained in the closed configuration.

However, the upper and/or lower locating arrangement may be configured so that, a thrust reverser half under load (e.g. a torsional load (e.g. with respect to a roll direction for an aircraft), an axial bending load (e.g. with respect to a pitching load for an aircraft), or a twisting load (corresponding to a yaw load for an aircraft)) may deflect relative to the casing structure and/or core structure, and it may be advantageous to provide a load path for reacting the associated load. The present disclosure provides such selectively-available load paths between the thrust reverser halves and the respective upper and lower support members, in particular by closure of the respective clearances under load (e.g. loads arising under normal operation or in a failure scenario). Such loading may be complex and dynamic (e.g. from normal operation and failure scenarios), and so the present disclosure avoids reference to a particular threshold load at which the respective clearances are closed. It will be appreciated that this will be a function of the configuration of the locating arrangements, coupling arrangements, and any further support means (e.g. a pneumatic or hydraulic support that assists movement of a thrust reverser half between configurations). Nevertheless, it can be specified that the propulsion device is configured to adopt the closed configuration under static load (e.g. for an aircraft propulsion device, when shutdown and supported on the ground), and to move to close one or more of the respective clearances to provide a load path, under loading of the respective thrust reverser half. The radial clearance C-R in the location features illustrated in FIG. 9B and FIG. 10 can also be chosen to limit deflection, and possible disengagement of the location feature illustrated in FIG. 8B (e.g., to avoid the TRU coupling portion (e.g. J-blade) 804 disengaging from the corresponding casing coupling portion 802 (e.g. an open V or U shaped channel) under extreme dynamic failure cases).

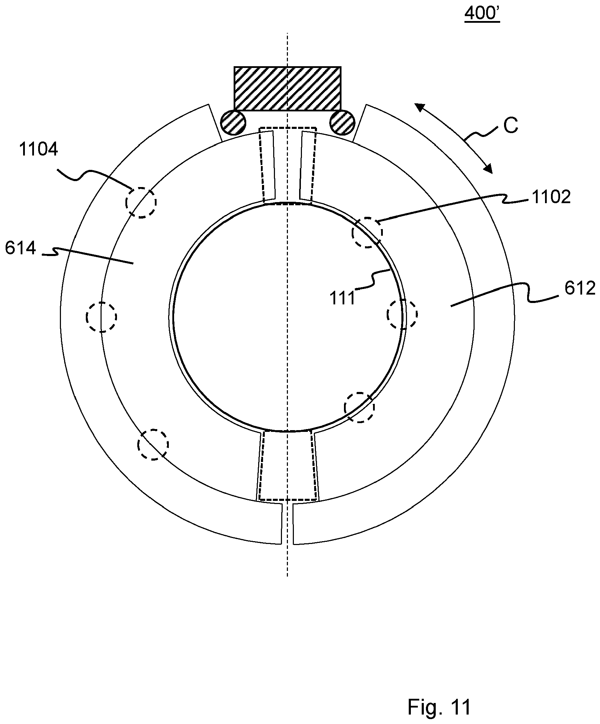

While the above examples refer to upper and lower locating arrangements generally provided at upper and lower ends of a thrust reverser half, it should be appreciated that similar locating arrangements may additionally or alternatively be provided at other intermediate locations along the arcuate extent of thrust reverser half, with corresponding TRU locating portions and support locating portions respectively. Further, such locating arrangements may be provided to engage with a support attached to the casing structure for the fan, or alternatively to a support provided on or integrally provided with the core structure. FIG. 11 schematically indicates a variant thrust reverser unit 400' substantially corresponding to that described above with respect to FIG. 6A and FIG. 6B, but comprising further engagement locations for such locating arrangements, including an array of angularly-distributed engagement locations 1102 on a first thrust reverser half 612 for engaging the core structure 111, and a further example array of angularly-distributed engagement locations 1104 on a second thrust reverser half 614 for engaging a support provided on the casing structure.

## Claims

1. A propulsion device (10) comprising:
a casing structure (402) to surround a fan (23) of the propulsion device;
a core structure (111) to support a core (11) of the propulsion device;
a thrust reverser unit, TRU, (610) comprising two thrust reverser halves (612, 614), each thrust reverser half (612, 614) being pivotable about a respective hinge line (604) between an open position for access to the core structure (111), and a closed position;
upper and lower support members (410, 430) extending from the casing structure (402) at diametrically opposing sides of a centreline axis, defining a vertical direction of the propulsion device from the lower support member (430) to the upper support member (410), each support member (410, 430) extending from the casing structure (402) at an axial location adjacent to or overlapping an axial extent of the TRU (610);
wherein for each thrust reverser half (612, 614) there is at least one locating arrangement comprising:
an upper locating arrangement (702) comprising an upper TRU locating portion (712) provided on the thrust reverser half (612, 614) and an upper support locating portion (710) provided on the upper support member (410), mutually configured to engage each other as the thrust reverser half (612, 614) moves towards the closed position in a closing operation; and/or
a lower locating arrangement comprising a lower TRU locating portion (910) provided on the thrust reverser half (612, 614) and a lower support locating portion (904) provided on the lower support member (430), mutually configured to engage each other as the thrust reverser half (612, 614) moves towards the closed position in the closing operation.

2. The propulsion device of claim 1, wherein for at least one of the upper and lower support members (410, 430), the support member extends from the casing structure (402) to the core structure (111) to provide a casing-core load path.

3. The propulsion device of claim 1 or 2, wherein for each thrust reverser half (612, 614) the at least one locating arrangement comprises the upper locating arrangement (702);
wherein the hinge line (604) is angularly offset from the vertical direction by a hinge offset about the centreline axis;
wherein the thrust reverser half (612, 614) is configured so that in the closed position the upper TRU locating portion (712) is angularly offset from the vertical direction by a locating portion offset about the centreline axis;
wherein the locating portion offset is less than the hinge offset, such that in the closing operation, the upper TRU locating portion (712) engages the respective upper support locating portion (710) along a direction having a radially outward component; and optionally wherein each upper TRU locating portion (712) and corresponding upper support locating portion (710) are configured to engage by a pin and opening arrangement, whereby the pin is configured to be received in the opening.

4. The propulsion device of any one of the preceding claims, wherein the upper locating arrangement (702) is configured to provide a structural load path between the thrust reverser half (612, 614) and one or more other structural elements of the propulsion device via the upper support member (410), for example the casing structure (402) and/or the core structure (111), and optionally wherein the structural load path includes radial walls of the upper support member (410), inboard of the hinge line.

5. The propulsion device of claim 3, wherein each thrust reverser half (612, 614) comprises a TRU coupling portion (804) at an angular location offset from the vertical direction by a coupling offset about the centreline axis, the TRU coupling portion (804) configured to engage a cooperating coupling portion (802) of the casing structure (402) in the closed position to form a coupling arrangement (800), coupling the thrust reverser half (612, 614) to the casing structure (402);
wherein the coupling offset is greater than the hinge offset, such that in the closing operation, the TRU coupling portion (804) engages the coupling portion (802) of the casing structure (402) along a direction having a radially inward component; and optionally wherein the TRU coupling portion (804) of each thrust reverser half (612, 614) comprises a projecting arm axially extending to overlap with an axial extent of the casing structure (402) and an engaging portion (806) depends from the projecting arm radially inwardly when the thrust reverser half (612, 614) is in the closed position to engage the cooperating coupling portion (802) of the casing structure (402); and optionally wherein the coupling portion (802) of the casing structure (402) comprises a groove and/or recess having a radially outer opening configured to receive the engaging portion (806) of the TRU coupling portion 804).

6. The propulsion device of claim 5, wherein the upper locating arrangement (702) and the coupling arrangement (800) are configured so that in the closing operation, the upper TRU locating portion (712) and the upper support locating portion (710) engage each other before the coupling portions (802) of the coupling arrangement (800) engage each other, to guide further movement in the closing operation.

7. The propulsion device of any one of the preceding claims, wherein for each thrust reverser half (612, 614):
the at least one locating arrangement comprises the lower locating arrangement; and
the lower TRU locating portion (910) is configured to engage the lower support locating portion (904) along a closing direction during the closing operation which substantially opposes the closing direction associated with the opposing lower TRU locating portion (910).

8. The propulsion device according to claim 7 and also according to claim 5, wherein the lower locating arrangement and the coupling arrangement (800) are configured so that in the closing operation, the lower TRU locating portion (910) and the lower support locating portion (904) engage each other before the coupling portions of the coupling arrangement (800) engage each other, to guide further movement in the closing operation.

9. The propulsion device of any one of claims 7-8, wherein each lower TRU locating portion (910) and corresponding lower support locating portion (904) are configured to engage by a pin and opening arrangement, whereby the pin is configured to be received in the opening.

10. The propulsion device of any one of the preceding claims, wherein the at least one locating arrangement comprises the upper locating arrangement (702);
wherein the upper locating arrangement (702) is configured so that movement from the open configuration to the closed configuration reduces a radial separation between opposing portions (710, 712) of the upper locating arrangement (702), and provides a radial clearance between the opposing portions (710, 712) in the closed configuration in a static state of the propulsion device;
wherein the upper locating arrangement (702) is configured to close the radial clearance under load to provide a load path between the respective thrust reverser half (612, 614) and the upper support member (410).

11. The propulsion device of any one of the preceding claims, wherein the at least one locating arrangement comprises the upper locating arrangement (702);
wherein the upper locating arrangement (702) is configured so that there is an axial clearance and/or a circumferential clearance between opposing portions (710, 712) of the upper locating arrangement (702) in a static state of the propulsion device;
wherein the upper locating arrangement (702) is configured to close the axial clearance and/or the circumferential clearance under load to provide a load path between the respective thrust reverser half (612, 614) and the upper support member (410).

12. The propulsion device of any one of the preceding claims, wherein the at least one locating arrangement comprises the lower locating arrangement;
wherein the lower locating arrangement is configured so that there is a circumferential clearance between opposing portions (904, 910) of the lower locating arrangement in a static state of the propulsion device;
wherein the lower locating arrangement is configured to close the circumferential clearance under load to provide a load path between the thrust reverser halves (612, 614); or between the respective thrust reverser half (612, 614) and the lower support member (430).

13. The propulsion device of any one of the preceding claims, wherein the at least one locating arrangement comprises the lower locating arrangement;
wherein the lower locating arrangement is configured so that there is a radial clearance and/or an axial clearance between opposing portions (904, 910) of the lower locating arrangement in a static state of the propulsion device;
wherein the lower locating arrangement is configured to close the circumferential clearance under load to provide a load path between the respective thrust reverser half (612, 614) and the lower support member (430).

14. The propulsion device of any one of the preceding claims, wherein each upper locating arrangement (702) is configured to provide a structural load path between the respective thrust reverser half (612, 614) and a support structure of the propulsion device for transferring vertical, lateral and/or axial loads; and/or
wherein each lower locating arrangement is configured to provide a structural load path between the respective thrust reverser half (612, 614) and a support structure of the propulsion device for transferring vertical, lateral and/or axial loads;
wherein the support structure of the propulsion device is the casing structure (402) and/or the core structure (111).

15. The propulsion device of any one of the preceding claims, wherein each upper locating arrangement (702) is configured to provide a structural load path between the respective thrust reverser half (612, 614) and a support structure of the propulsion device for transferring roll, pitch and/or yaw loads; and/or
wherein each lower locating arrangement is configured to provide a structural load path between the respective thrust reverser half (612, 614) and a support structure of the propulsion device for transferring roll, pitch and/or yaw loads;
wherein the support structure of the propulsion device is the casing structure (402) and/or the core structure (111).
